# EUROPEAN PATENT APPLICATION

(11) **EP 4 797 660 A1**
(43) Date of publication of application: **26.08.2026**
(21) Application number: 26159598.7
(22) Date of filing: 19.02.2026
(51) Int. Cl.: H04L 67/52, H04W 4/02, H04W 4/029, H04W 4/80, H04W 64/00, H04W 88/06

(54) **BLUETOOTH- AND CELLULAR-CAPABLE WIRELESS LOCATING DEVICE**

(30) Priority: 24.02.2025 US 202519061785
(71) Applicant: T-Mobile USA, Inc., Bellevue, WA 98006-1350 (US)
(72) Inventor: KAYE, Jonathan Adam, Bellevue, 98006 (US); AHLBERG, Kim Petter Aake, Bellevue, 98006 (US)
(74) Representative: Suddaby, Mark Edward

(57) **Abstract**

As described herein, a wireless locating device is equipped with a Bluetooth radio, global positioning system (GPS) radio, WiFi radio, cellular radio, and battery. Based on an update frequency, the wireless locating device activates the Bluetooth radio which then broadcasts a message. A user equipment (UE) receiving that message may connect with the wireless locating device, which may then send to the UE at least a battery indicator. The UE may then add a UE location to the battery indicator and provide both to a service that maintains information about wireless locating devices. When no UE connects to the wireless locating device, the wireless locating device second activates the GPS radio and WiFi radio, which obtain a location or location information of the wireless locating device, and the cellular radio. The wireless locating device then sends its location and battery indicator to the service via a cellular connection.

## Description

### BACKGROUND

So much time is wasted looking for lost things. Technology that helps locate what we have lost - or that prevents it from being "lost" in the first place, is very welcome. These recent solutions include devices capable of wireless communication - Bluetooth-capable devices, cellular- or WiFi-capable devices, etc. - that can send their locations either in wireless communications or simply by virtue of wirelessly communicating. A Bluetooth-capable device, for example, may have a small form factor and may be placed in or attached to an item to track it. The Bluetooth-capable device may use very little power and simply broadcast a message - the ability of a nearby device to receive the message is sufficient to confirm that the item is in the relatively short range of Bluetooth radios. With such devices, however, if the item and Bluetooth-capable device are moved out of Bluetooth range, the item is as lost as if it had no Bluetooth-capable device nearby.

A cellular-capable device, in contrast, can connect to a cellular network and provide its location anywhere there is cellular connectivity. For example, a lost or stolen item or a loved one may be located some distance from where it/they are supposed to be. When a cellular-capable device accompanies the item or person, however, that device can be used to locate it/them. Further, a cellular-capable device equipped with a global positioning system (GPS) radio can find and send locations quickly, too, which is important when looking for, e.g., a person or pet who is lost. Cellular-capable devices, however, have higher battery requirements and thus need recharging more often. When they include GPS radios, the power requirements are even higher.

### BRIEF DESCRIPTION OF THE DRAWINGS

The detailed description is set forth with reference to the accompanying figures. In the figures, the left-most digit(s) of a reference number identifies the figure in which the reference number first appears. The same reference numbers in different figures indicate similar or identical items.

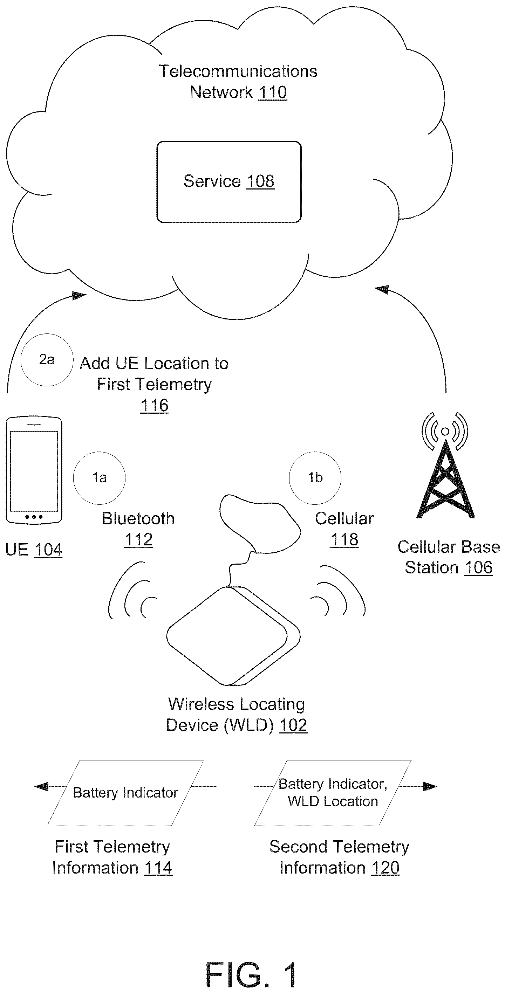

FIG. 1 illustrates a wireless locating device configured to attempt communication by Bluetooth and, if not successful, by cellular, as well as systems capable of receiving such communications.

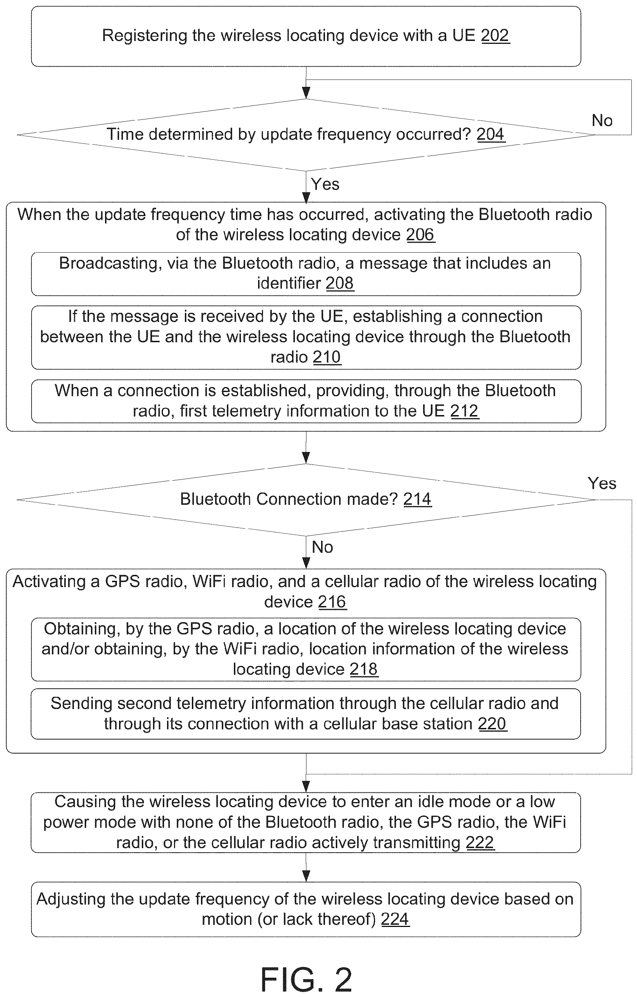

FIG. 2 is a flow diagram of an illustrative process for a wireless locating device to first activate a Bluetooth radio and, if no Bluetooth connection is made, second activate a cellular radio to convey location and battery information for the wireless locating device.

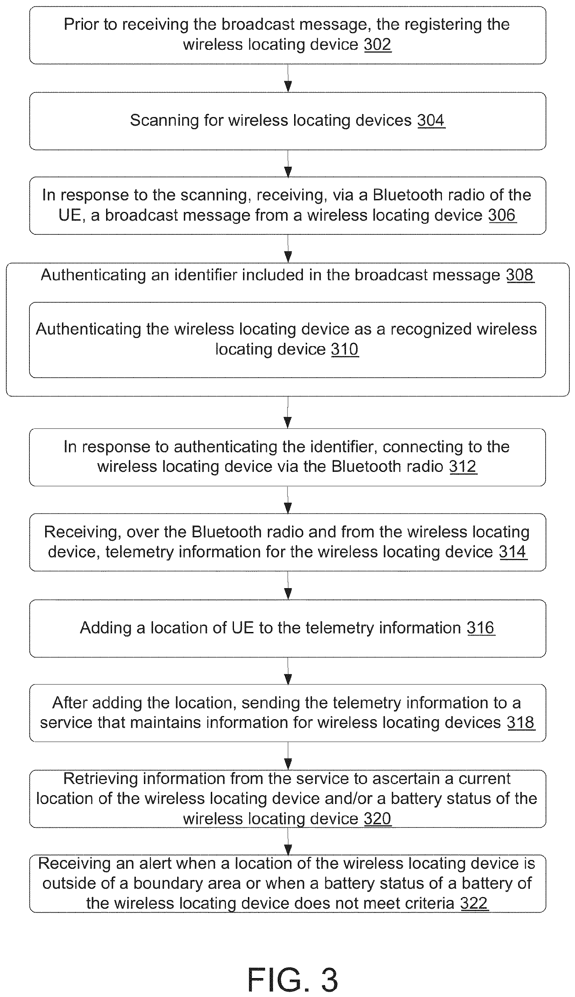

FIG. 3 is a flow diagram of an illustrative process for a user equipment (UE) to receive a broadcast message from a wireless locating device via Bluetooth, connect to the wireless locating device over Bluetooth, receive telemetry information, including a battery indicator, from the wireless locating device, add a location of the UE to the telemetry information, and send that updated telemetry information on to a service that maintains information for wireless locating devices.

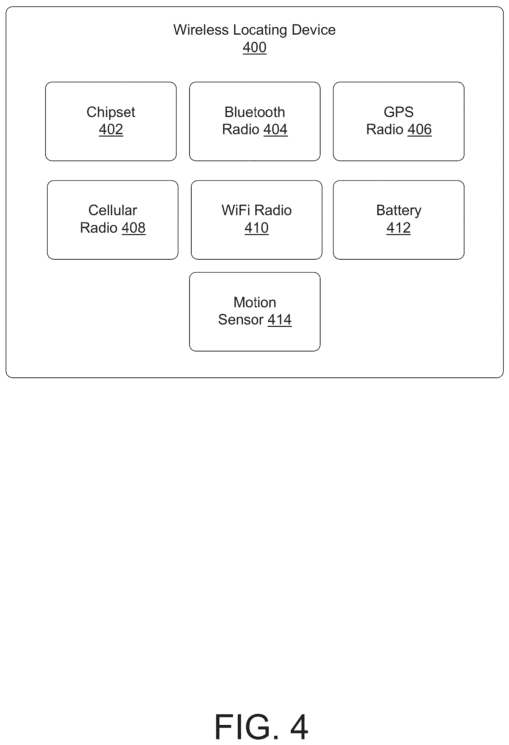

FIG. 4 is a schematic diagram of a wireless locating device equipped with a Bluetooth radio, cellular radio, and chipset configured to first activate the Bluetooth radio and, if no Bluetooth connection is made, second activate a cellular radio to convey location and battery information for the wireless locating device.

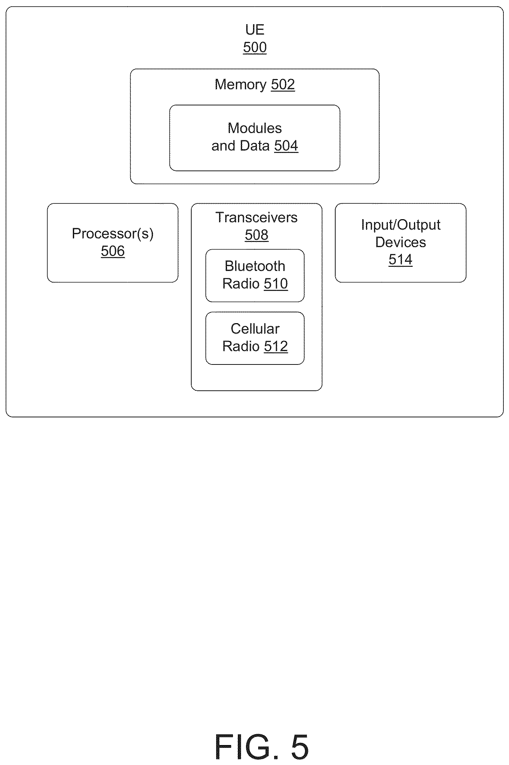

FIG. 5 is a schematic diagram of a UE capable of connecting to a wireless locating device over Bluetooth, adding the UE's location to telemetry information received from the wireless locating device, and sending that updated telemetry information on to a service that maintains information for wireless locating devices.

### DETAILED DESCRIPTION

This disclosure is directed in part to a wireless locating device equipped with Bluetooth and cellular radios, using one or the other based on proximity of the wireless locating device user's user equipment (UE). The wireless locating device is configured to activate the Bluetooth radio first and broadcast a message with it. If the UE is within Bluetooth range and passively or actively scanning with its own Bluetooth radio, the UE will receive the broadcast message, establish a connection with the wireless locating device, and receive telemetry information from it. If no Bluetooth connection is established, the wireless locating device then activates its cellular radio and transmits telemetry information to cellular base station. Also, the wireless locating device may be equipped with at least one of a global positioning system (GPS) radio to obtain a GPS location for the wireless locating device or a WiFi radio to obtain indicia of a location for the wireless device. Such location indicia may include a specified number (e.g., ten) of nearby WiFi access points encountered with the WiFi radio when scanning for access points. In some implementations, the wireless locating device may activate both the GPS radio and the WiFi radio when it activates the cellular radio and include the GPS location and the location indicia from the WiFi radio with the telemetry information it provides via the cellular radio. The telemetry information provided via the Bluetooth radio of the wireless locating device may lack location information, relying on the UE to add the location of the UE to the telemetry information received from the wireless locating device. The ultimate recipient of the telemetry information, whether sent via cellular or via Bluetooth, may be a service of a telecommunications network that maintains information for wireless locating devices. In addition to the location, the telemetry information may include at least one battery indicator, such as a battery status or battery measurement. Any number of sensor values (e.g., ambient light level, humidity, loud sounds, etc.) may also be included in the telemetry information.

By attempting Bluetooth first and activating cellular, GPS, and WiFi radios only when a Bluetooth connection is unavailable, the wireless locating device is able to prolong effective battery life and lengthen a period of time between charges. But by retaining cellular, GPS, and WiFi radios, the wireless locating device ensures that it (and the object or person it accompanies) can be found even when outside of Bluetooth range.

FIG. 1 illustrates a wireless locating device configured to attempt communication by Bluetooth and, if not successful, by cellular, as well as systems capable of receiving such communications. As illustrated, a wireless locating device 102 may connect to a UE 104 or cellular base station 106. The UE 104 and cellular base station 106 may send information on to a service 108 of a telecommunications network 110. The connection to the UE 104 may be a Bluetooth connection 112 and the wireless locating device 102 may send first telemetry information 114 to the UE 104 over the Bluetooth connection 112. At 116, UE 104 may add location information to the first telemetry information 114 before sending it on to the service 108. The connection to the cellular base station 106 may be a cellular connection 118 and the wireless locating device 102 may send second telemetry information 120 to the service 108 through the cellular base station 106.

As used herein, "first" and "second" with respect to telemetry information and activation are used simply to differentiate instances of information or operations, not to indicate order and importance.

In various implementations, the wireless locating device 102 may have a form factor designed such that it can be attached to a person or thing or placed within a pocket or other crevice that is attached to the person or thing. For example, the wireless locating device 102 can have a clip, an elastic band, a drawstring, a lanyard, a magnet, an adhesive surface, a rope, cord, or string capable of being tied in a knot, etc. Alternatively, it may have none of these things but may be small and easily placed in a small pocket or compartment. In implementations, the wireless locating device 102 may be both small and have some mechanism of attachment.

The wireless locating device 102 may also have a shell made of some material and capable of holding at least a Bluetooth radio, a GPS radio, a cellular radio, a WiFi radio, a chipset, and a battery. The shell may also have a surface capable of receiving charge for the battery, a physical port for receiving a charging cable, or both. An example of a wireless locating device 102 is shown in FIG. 4 and described herein in detail with respect to that figure.

The UE 104 may be any sort of wireless communication device, such as a cellular phone, a tablet computer, an Internet-of Things (IoT) device (e.g., a watch, glasses, goggles, etc.), a gaming device, etc. The user of the UE 104 may subscribe for services of a network operator of the telecommunications network 110. Further, the UE 104 may include application(s) for use over the telecommunications network 110, such as a native dialer, other calling application(s), messaging application(s), browsing application(s), etc., as well as platform functionality for connecting to and communicating over the telecommunications network 110. In some implementations, one of these applications or an additional one may include, among its functions, providing the user of the UE 104 with a location and battery status of the wireless locating device 102 and may interface with both the wireless locating device 102 and the service 108. Additionally, the UE 104 may connect to a cellular network or WiFi network to communicate with the service 108. In one example, such a cellular network may be the cellular network of the cellular base station 106. The UE 104 may also have a GPS radio, WiFi radio, or both which the UE 104 may use to determine its location. An example UE 104 is shown in FIG. 5 and is described below in detail with reference to that figure.

The cellular base station 106 may be any sort of equipment at a location configured to send and receive wireless communications over at least one radio frequency (RF). The cellular base station 106 may be associated with a cell of the telecommunications network 110 and may provide wireless coverage to that cell, sending to and receiving from devices such as the wireless locating device 102 and/or the UE 104. The cellular base station 106 may also have a backhaul connection to a core network of the telecommunications network 110, which may be wired, wireless, or partially wired and partially wireless. The cellular base station 106 may utilize any type of radio access technology, such as Long Term Evolution (LTE), New Radio (NR), etc.

The service 108 may be implemented by one or more physical computing devices and may also, in some implementations, operate in a virtual environment or slice. The service 108 may be part of the telecommunications network 110, as shown in FIG. 1, or may be separate from it, on another network, and accessed through the telecommunications network 110. Further, the service 108 may be configured to at least receive locations and battery indicators for wireless locating devices, to store those locations and battery indicators along with device identifiers of the wireless locating devices, and to provide a location and at least one battery indicator for a wireless locating device (such as wireless locating device 102) in response to a query that specifies a device identifier for a wireless locating device 102. Such a query may be made, for example, by an application of a UE 104 that renders location and battery information for wireless locating devices to a display of the UE 104 and enables the UE 104 to make requests of the service 108 for the location and battery. When the location received is in the form of location information, such as the ten closest WiFi access points to the wireless locating device 102, the service 108 may use that location information to determine a location and may store that determined location, either in place of or along with the location information. In some examples, the service 108 may also enable the user, through the application, to set geographic and battery alerts such that if the location of the wireless locating device 102 changes (e.g., more than a threshold amount) or the battery indicator fails to meet criteria. If alert criteria are met, the service 108 then sends an alert to the UE 104.

The telecommunications network 110 may include a core network and access network(s). The access networks may include any one or more base stations (e.g., cellular base station 106) or other wireless access points for wireless communication with at least the UE 104 and/or wireless locating device 102. As noted herein, the access networks may be connected to the core network through a wired and/or wireless backhaul. The core network may include components such as a user plane function (UPF), a service management function (SMF), an access and mobility management function (AMF), a network repository function (NRF), a unified data management (UDM) node/function, charging function (CHF), etc. These names each reflect specific generation(s) of cellular technology; it is to be understood that they also represent/cover their predecessor and successor nodes/functions (in prior or later generations) with same or similar purposes. The telecommunications network 110 may also include an Internet Protocol multimedia subsystem (IMS). The IMS may include call session control functions (CSCF), such as a proxy CSCF (P-CSCF), a serving CSCF (S-CSCF), and an interrogating CSCF (I-CSCF), as well as telephony application servers.

In various implementations, before the UE 104 will connect with a wireless locating device 102, the wireless locating device 102 will be registered with the UE 104 or with an account (e.g., a subscriber account) of a user of the UE 104. In one example, the registration may include powering on the wireless locating device 102 in proximity to the UE 104 with the Bluetooth radio of the UE 104 turned on. The user of the UE 104, through an application on the UE 104, may select to register a new wireless locating device 102, which may cause the UE 104 to scan for a new wireless locating device 102. The wireless locating device 102 may transmit a beacon with its device identifier or authentication information, and the UE 104 may detect the beacon and the application of the UE 104 may notify that user of the 104 of the detected wireless locating device 102. If the user indicates to the application that the wireless locating device 102 should be registered, the application saves the device identifier or authentication information of the wireless locating device 102 for later authentication of the wireless locating device 102. At this point, the wireless locating device 102 is registered with the UE 104.

The wireless locating device 102 may operate in a powered-on mode, with various power states depending on which component(s) are activated. In some examples, the chipset of the wireless locating device 102 may operate a timer configured with an update frequency and, upon the timer reaching the update frequency, the chipset activates the Bluetooth radio and possibly cellular, GPS, and WiFi radios in the manner described further herein. After telemetry information has been transmitted using either the Bluetooth radio or the cellular radio, the chipset returns the wireless locating device 102 to an idle or low power mode and resets the timer measured against the update frequency, and the timer runs until the next time the update frequency is reached. For example, the update frequency may be every hour, and the chipset of the wireless locating device 102 may activate the radio(s) every hour.

In some implementations, the wireless locating device 102 may have a motion sensor configured to detect when the wireless locating device 102 is in motion. Such a sensor may be independent of location determinations and may detect the physical effects of motion (e.g., vibration, rotation, etc.). When motion is detected, the chipset may change the update frequency. For example, if the update frequency is every hour when the wireless locating device 102 is stationary, the chipset may change the update frequency to every two minutes when the wireless locating device 102 is moving. After the device has been stationary for a threshold period of time, then the update frequency may be reverted to the larger time period (e.g., reverted to one hour). In some examples, the update frequency may even be lengthened the longer the stationary period goes on for. For instance, if the device has been stationary for twelve hours, the update frequency could be increased to two hours, then four hours, and so on, until some boundary/longest possible update frequency is reached.

When the updated frequency is reached and the chipset activates the Bluetooth radio of the wireless locating device 102, the Bluetooth radio will broadcast a message that includes a device identifier or authentication information - some value that will allow the UE 104 to recognize the broadcast as being from the wireless locating device 102. The UE 104 will have its Bluetooth radio on and be passively or actively scanning for Bluetooth broadcasts. The application of the UE 104 for providing wireless locating device 102 information may be in the background or foreground while such scanning occurs.

In various implementations, upon detecting the broadcast from the wireless locating device 102, the application of the UE 104 may authenticate the device identifier or authentication information of the wireless locating device 102 including in the broadcast message. Such authentication may include comparing the device identifier or authentication information to that of registered wireless locating devices. When the wireless locating device 102 is a registered wireless locating device, the application will successfully authenticate the device identifier or authentication information in the broadcast message.

With successful authentication, the Bluetooth radio of the UE 104 and the Bluetooth radio of the wireless locating device 102 may form a Bluetooth connection 112 for the transmission of telemetry information 114. This telemetry information 114 - also described herein as first telemetry information 114 - may include a device identifier and authentication information as well as at least one battery indicator. The telemetry information 114 may lack a location when transmitted from the Bluetooth radio of the wireless locating device 102. The at least one battery indicator may reflect a battery status or battery measurement of a battery of the wireless locating device 102 (e.g., "battery is charging", "battery has low power", "battery: 40% power", etc.) and may be indicated using any kind of parameter value (e.g. Boolean, integer, string, etc.). Once the Bluetooth radio of the wireless locating device 102 has successfully transmitted the telemetry information, the chipset of the wireless locating device 102 returns the wireless locating device 102 to an idle or low power mode and resets the timer for the update frequency.

In various implementations, when the application of the UE 104 receives the telemetry information 114, the application may add, at 116, a location of the UE 104 to the telemetry information 114, with the location of the UE 104 serving as a proxy for a location or location information of the wireless locating device 102 (since the UE 104 and wireless locating device 102 are within Bluetooth range of each other). The location of the UE 104 may be a GPS location of the UE 104 or any other sort of location (e.g., a location obtained using access point triangulation of access point location information, a list of nearest WiFi access points, etc.). Once the application has added, at 116, the location of the UE 104 to the telemetry information 114, the application may transmit this modified/updated telemetry information 114 to the service 108 via, e.g., a cellular or WiFi connection.

In some implementations, the Bluetooth radio of the wireless locating device 102 may not be successful in making a Bluetooth connection 112 with the Bluetooth radio of the UE 104. This may occur, for instance, when the UE 104 is not in Bluetooth range of the wireless locating device 102. After a threshold time period for attempting connection has been met, the chipset of the wireless locating device 102 returns the Bluetooth radio to an inactive state and activates the WiFi radio, GPS radio and the cellular radio of the wireless locating device 102.

When the GPS radio is activated, it may communicate with GPS satellites to obtain a GPS location of the wireless locating device 102. Upon obtaining this location, the GPS radio may return to an inactive status.

When the WiFi radio is activated, it may scan for nearby WiFi access points and identify a threshold number of these WiFi access points (e.g., ten). Upon obtaining these WiFi access point identifiers, the WiFi radio may return to an inactive status.

In various implementations, then the cellular radio is activated, it may establish a cellular connection 118 with the cellular base station 106. Upon establishing the cellular connection 118 and a data connection with the endpoint for its transmission - the service 108 - the cellular radio of the wireless locating device 102 may send telemetry information 120 - also referred to herein as second telemetry information 120 - to the service 108 over the cellular connection 118 and through the cellular base station 106. The second telemetry information 120 may include the same values as the first telemetry information 114 (a device identifier or authentication information and at least one battery indicator) with the addition of the GPS location of the wireless locating device 102 obtained by the GPS radio, the location information (WiFi access point identifiers) of the wireless locating device 102 obtained by the WiFi radio, or both. Upon transmitting this second telemetry information 120, the cellular radio may return to an inactive state or low power mode.

In some implementations, when the service 108 receives the modified/updated first telemetry information 114 or the second telemetry information 120, it stores the location and battery indicator(s) included therein. It may also compare this information to triggers for alerts. For example, the user of the UE 104 may have specified or chosen an alert when the wireless locating device 102 moves inside or outside of a geographic boundary (e.g., a boundary specified or chosen by the user), when the battery of the wireless locating device 102 is low or below a specific measurement threshold, when an ambient light level changes, when humidity is detected, or when loud sound is detected. If the user has specified/chosen such an alert (e.g., through the user's application), the service 108 may compare the location and battery indicator(s) included in the telemetry information 114/120 to the alert triggers and, if a trigger is met, send a corresponding alert to the application of the UE 104. The application may listen passively while the application is in the background or foreground and may present the alert to the user on the UE 104 when the alert is received.

The service 108 may also send periodic updates of the location and battery indicator(s) to the application of the UE 104 and/or provide that information in response to a request from the application. When the application receives the location and the battery indicator(s), it may present the information if, e.g., the application is in the foreground or may locally store the information for later retrieval and rendering if, e.g., the application is in the background.

FIGS. 2 and 3 illustrate example processes. These processes are illustrated as logical flow graphs, each operation of which represents a sequence of operations that can be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be omitted or combined in any order and/or in parallel to implement the processes.

FIG. 2 is a flow diagram of an illustrative process for a wireless locating device to first activate a Bluetooth radio and, if no Bluetooth connection is made, second activate a cellular radio to convey location and battery information for the wireless locating device. As illustrated at 202, the wireless locating device may first be registered with a UE.

At 204, the wireless locating device may determine if a time determined by an update frequency has occurred. If the time has not occurred, the wireless locating device may wait for the time to occur.

At 206, when the update frequency time has occurred, a chipset of the wireless locating device may activate the Bluetooth radio of the wireless locating device. At 208, the Bluetooth radio may broadcast a message that includes an identifier. At 210, if the message is received by the UE, a connection may be established between the UE and the wireless locating device through the Bluetooth of the wireless locating device. At 212, when such a connection is established, the wireless locating device may provide, through its Bluetooth radio, first telemetry information to the UE. The first telemetry information may lack a location but include at least one battery indicator. In some implementations, the at least one battery indicator may include one or both of a battery status or a battery measurement.

At 214, if no connection is made at 210, the chipset of the wireless locating device second activates, at 216, a GPS radio of the wireless locating device, a WiFi radio of the wireless locating device, and a cellular radio of the wireless locating device. At 218, the GPS radio obtains a location of the wireless locating device and/or the WiFi radio obtains location information of the wireless locating device. At 220, the wireless locating device sends second telemetry information through the cellular radio and through its connection with a cellular base station. The second telemetry information may include the at least one battery indicator and at least one of the location of the wireless locating device or the location information of the wireless locating device.

At 222, after transmitting the first telemetry information or the second telemetry information, the chipset of the wireless locating device may cause the wireless locating device to enter an idle mode or a low power mode with none of the Bluetooth radio, the GPS radio, WiFi radio, or the cellular radio actively transmitting.

In some implementations, the wireless locating device may have a motion sensor and the motion sensor may detect motion of the wireless locating device. At 224, in response to detected motion - or in response to lack thereof for a time period, the wireless locating device may adjust the update frequency of the wireless locating device. In some implementations, the chipset of the wireless locating device may lengthen the update frequency when the motion sensor indicates over a period of time that the wireless locating device has been stationary. In further implementations, increasingly longer update frequencies may be used for increasingly longer periods of time where the wireless locating device has been stationary. While shown as happening after 222, this updating of the update frequency may occur before or after any of 202-222.

FIG. 3 is a flow diagram of an illustrative process for a UE to receive a broadcast message from a wireless locating device via Bluetooth, connect to the wireless locating device over Bluetooth, receive telemetry information, including a battery indicator, from the wireless locating device, add a location of the UE to the telemetry information, and send that updated telemetry information on to a service that maintains information for wireless locating devices. As illustrated at 302, prior to receiving the broadcast message, the UE may register the wireless locating device.

At 304, the UE may scan for wireless locating devices.

At 306, in response to the scanning, the UE may receive, via a Bluetooth radio of the UE, a broadcast message from a wireless locating device.

At 308, the UE may authenticate an identifier included in the broadcast message. The identifier may be a device identifier for the wireless locating device or authentication information and the authenticating may comprise, at 310, authenticating the wireless locating device as a recognized wireless locating device.

At 312, in response to authenticating the identifier, the UE may connect to the wireless locating device via the Bluetooth radio.

At 314, the UE may receive, over the Bluetooth radio and from the wireless locating device, telemetry information for the wireless locating device. In some implementations, the telemetry information may include at least one of a battery status or a battery measurement for the wireless locating device.

At 316, the UE may add a location of UE to the telemetry information.

At 318, after adding the location, the UE may send the telemetry information to a service that maintains information for wireless locating devices.

At 320, the UE may retrieve information from the service to ascertain a current location of the wireless locating device and/or a battery status of the wireless locating device. While shown as occurring after 318 and before 322, it is to be understood that the retrieving at 320 may occur before or after any of 302-318 or 322.

At 322, the UE may receive an alert when a location of the wireless locating device is inside or outside of a boundary area, when a battery status of a battery of the wireless locating device does not meet criteria when an ambient light level changes, when humidity is detected, or when loud sound is detected. For example, a battery status may not meet a criterion when a state of the charge (SOC) of the battery is above or below a threshold SOC level. In another example, a battery status may not meet a criterion when a battery temperature of the battery is below or exceeds a battery temperature threshold. While shown as occurring after 320, it is to be understood that the receiving at 322 may occur before or after any of 302-320.

FIG. 4 is a schematic diagram of a wireless locating device 400 equipped with a Bluetooth radio, cellular radio, and chipset configured to first activate the Bluetooth radio and, if no Bluetooth connection is made, second activate a cellular radio to convey location and battery information for the wireless locating device.

In various implementations, the chipset 402 of the wireless locating device 400 can include at least a processor and storage. The processor can be a central processing unit (CPU), a graphics processing unit (GPU), or both CPU and GPU, or any other type of processing unit. The processor may have numerous arithmetic logic units (ALUs) that perform arithmetic and logical operations, as well as one or more control units (CUs) that extract instructions and stored content from processor cache memory, and then executes these instructions by calling on the ALUs, as necessary, during program execution. The processor may also be responsible for executing all computer applications stored in memory of the chipset 402, which can be associated with types of volatile (RAM) and/or nonvolatile (ROM, flash memory, etc.) memory or some combination of the two. The memory associated with the chipset 402 can further include non-transitory computer-readable media, such as volatile and nonvolatile, removable and non-removable media implemented in any method or technology for storage of information, such as computer readable instructions, data structures, program modules, or other data. System memory, removable storage, and non-removable storage are all examples of non-transitory computer-readable media. Examples of non-transitory computer-readable media include, but are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other non-transitory medium which can be used to store the desired information. The operations of the chipset 402 and its interactions with the Bluetooth radio 404, GPS radio 406, cellular radio 408, WiFi radio 410, battery 412, and motion sensor 414 are described elsewhere herein in greater detail.

The Bluetooth radio 404 may be any sort of radio capable of communicating using Bluetooth technology, such as broadcasting over Bluetooth, forming Bluetooth connections with other devices in Bluetooth range that have Bluetooth radios, and exchanging data over such connections. In the wireless locating device 400, the Bluetooth radio can be activated by the chipset 402 and deactivated based on a timer or on command from the chipset 402. The information retrieved and transmitted using the Bluetooth radio 404 is described elsewhere herein in greater detail.

In various implementations, the GPS radio 406 may be activated by the chipset 402 and, when activated, may interact with a GPS satellite to obtain a GPS location of the device having the GPS radio 406 (i.e., the wireless locating device 400). The GPS radio 406 may provide the GPS location to the chipset 402 or to the cellular radio 408, or the GPS location may be retrieved by the chipset 402 or cellular radio 408.

The cellular radio 408 may be configured to use a specific type of radio access technology, such as Long Term Evolution (LTE) or New Radio (NR), or may be capable of sending and receiving radio frequency (RF) transmissions over multiple types of radio access technology. The cellular radio 408 is activated by the chipset 402 and deactivated based on a timer or on command from the chipset 402. The information retrieved and transmitted using the cellular radio 408 is described elsewhere herein in greater detail.

In various implementations, the WiFi radio 410 may be activated by the chipset 402 and, when activated, may scan for WiFi access points to obtain identifiers of the WiFi access points nearest to device having the WiFi radio 410 (i.e., the wireless locating device 400). The WiFi radio 410 may provide the location information (WiFi access point identifiers) to the chipset 402 or to the cellular radio 408, or the location information may be retrieved by the chipset 402 or cellular radio 408.

The battery 412 may maintain a charge to provide power to the wireless locating device 400 and may be recharged through a capacitance charger, wired charger, etc. The battery 412 may also be associated with a battery status, battery measurement, or both. As described elsewhere herein, the battery status and/or battery measurement can be expressed through at least one battery indicator.

In some implementations, the motion sensor 414 may be capable of detecting motion of the wireless locating device and of alerting the chipset 402 of the sensed motion. In some implementations, the motion sensor 414 may have a timer that runs after providing an alert before it can provide a subsequent alert.

FIG. 5 is a schematic diagram of a UE capable of connecting to a wireless locating device over Bluetooth, adding the UE's location to telemetry information received from the wireless locating device, and sending that updated telemetry information on to a service that maintains information for wireless locating devices. As shown, the UE 500 includes a memory 502 storing modules and data 504, processor(s) 506, transceivers 508 (including a Bluetooth radio 510 and cellular radio 512), and input/output devices 514.

In various examples, the memory 502 can include system memory, which may be volatile (such as RAM), non-volatile (such as ROM, flash memory, etc.) or some combination of the two. The memory 502 can further include non-transitory computer-readable media, such as volatile and nonvolatile, removable and non-removable media implemented in any method or technology for storage of information, such as computer readable instructions, data structures, program modules, or other data. System memory, removable storage, and non-removable storage are all examples of non-transitory computer-readable media. Examples of non-transitory computer-readable media include, but are not limited to, RAM, ROM, EEPROM, flash memory or other memory technology, CD-ROM, DVD or other optical storage, magnetic cassettes, magnetic tape, magnetic disk storage or other magnetic storage devices, or any other non-transitory medium which can be used to store the desired information.

The memory 502 can include one or more software or firmware elements, such as computer-readable instructions that are executable by the one or more processors 506. For example, the memory 502 can store computer-executable instructions associated with modules and data 504. The modules and data 504 can include a platform, operating system, and applications, and data utilized by the platform, operating system, and applications. Further, the modules and data 504 can implement any of the functionality for examples of the UE 500 described and illustrated herein (e.g., UE 104).

In various examples, the processor(s) 506 can be a CPU, a GPU, or both CPU and GPU, or any other type of processing unit. Each of the one or more processor(s) 506 may have numerous ALUs that perform arithmetic and logical operations, as well as one or more CUs that extract instructions and stored content from processor cache memory, and then executes these instructions by calling on the ALUs, as necessary, during program execution. The processor(s) 506 may also be responsible for executing all computer applications stored in the memory 502, which can be associated with types of volatile (RAM) and/or nonvolatile (ROM) memory.

The transceivers 508 can include modems, interfaces, antennas, Ethernet ports, cable interface components, and/or other components that perform or assist in exchanging wireless communications, wired communications, or both. For example, the transceivers 508 include at least the Bluetooth radio 510 and cellular radio 512. The Bluetooth radio 510 may be any sort of radio capable of communicating using Bluetooth technology, such as broadcasting over Bluetooth, forming Bluetooth connections with other devices in Bluetooth range that have Bluetooth radios, and exchanging data over such connections. The cellular radio 512 may be configured to use a specific type of radio access technology, such as LTE or NR, or may be capable of sending and receiving RF transmissions over multiple types of radio access technology. Further, the transceivers 508 may include at least one of a WiFi radio or a GPS radio to obtain a location or location information for the computing device.

While the computing device need not include input/output devices 514, in some implementations it may include one, some, or all of these. For example, the input/output devices 514 can include a display, such as a liquid crystal display or any other type of display. For example, the display may be a touch-sensitive display screen and can thus also act as an input device or keypad, such as for providing a soft-key keyboard, navigation buttons, or any other type of input. The input/output devices 514 can include any sort of output devices known in the art, such as a display, speakers, a vibrating mechanism, and/or a tactile feedback mechanism. Output devices can also include ports for one or more peripheral devices, such as headphones, peripheral speakers, and/or a peripheral display. The input/output devices 514 can include any sort of input devices known in the art. For example, input devices can include a microphone, a keyboard/keypad, and/or a touch-sensitive display, such as the touch-sensitive display screen described above. A keyboard/keypad can be a push button numeric dialing pad, a multi-key keyboard, or one or more other types of keys or buttons, and can also include a joystick-like controller, designated navigation buttons, or any other type of input mechanism.

Although features and/or methodological acts are described above, it is to be understood that the appended claims are not necessarily limited to those features or acts. Rather, the features and acts described above are disclosed as example forms of implementing the claims.

Also, while the descriptions provided herein may be in the context of certain radio access technologies, networks, and network topologies, such as Fifth Generation (5G)/NR mobile communications, the proposed concepts, schemes, and any variations thereof may be implemented in, for and by other types of radio access technologies, networks, and network topologies. Such radio access technologies, networks, and network topologies may include, for example and without limitation, LTE, Internet-of-Things (IoT), CAT-M (LTE-M), Narrow Band Internet of Things (NB-IoT), vehicle-to-everything (V2X), fixed wireless internet, and non-terrestrial network (NTN) communications. Thus, the scope of the disclosure is not limited to the examples described herein.

## Claims

1. A wireless locating device comprising:
a battery associated with at least one battery indicator;
a Bluetooth radio configured to broadcast an identifier and provide, when connected to a user equipment, UE, first telemetry information to the UE, the first telemetry information including the at least one battery indicator;
a global positioning system, GPS, radio configured to obtain a GPS location of the wireless locating device;
a WiFi radio configured to obtain identifiers of a number of nearest WiFi access points as location information for the wireless locating device;
a cellular radio configured to connect to a cellular base station and provide second telemetry information including the at least one battery indicator and at least one of the GPS location or the location information; and
a chipset configured to determine an update frequency and, at times specified by the update frequency, first activate the Bluetooth radio and, if no connection is made between the Bluetooth radio and a UE, second activate the GPS radio, the WiFi radio, and the cellular radio.

2. The wireless locating device of claim 1, further comprising a motion sensor to detect motion of the wireless locating device, wherein the chipset lengthens the update frequency when the motion sensor indicates over a period of time that the wireless locating device has been stationary.

3. The wireless locating device of claim 1 or 2, wherein the chipset causes the wireless locating device, after transmitting the first telemetry information or the second telemetry information, to enter an idle mode or a low power mode with none of the Bluetooth radio, the GPS radio, the WiFi radio, or the cellular radio actively transmitting.

4. The wireless locating device of any preceding claim, wherein the identifier broadcast by the Bluetooth radio is a device identifier for the wireless locating device or is authenticating information for the wireless locating device.

5. The wireless locating device of any preceding claim , wherein the first telemetry information lacks a location and the UE adds a location of UE to first telemetry information for sending on to a service that maintains information for wireless locating devices.

6. The wireless locating device of any preceding claim , wherein the cellular radio is configured to send, through the cellular base station, the second telemetry information to a service that maintains information for wireless locating devices.

7. A method comprising:
receiving, by a user equipment, UE, via a Bluetooth radio of the UE, a broadcast message from a wireless locating device;
authenticating, by the UE, an identifier included in the broadcast message;
in response to authenticating the identifier, connecting, by the UE, with the wireless locating device via the Bluetooth radio;
receiving, by the UE over the Bluetooth radio and from the wireless locating device, telemetry information for the wireless locating device;
adding, by the UE, a location of UE to the telemetry information; and
after the adding, sending, by the UE, the telemetry information to a service that maintains information for wireless locating devices.

8. The method of claim 7, further comprising scanning for wireless locating devices, wherein the receiving the broadcast message is in response to the scanning, and wherein the identifier is a device identifier for the wireless locating device or authentication information and the authenticating comprises authenticating the wireless locating device as a recognized wireless locating device.

9. The method of claim 7 or 8, further comprising, prior to receiving the broadcast message, registering the wireless locating device.

10. The method of any of claims 7 to 9, further comprising retrieving information from the service to ascertain at least one of a current location of the wireless locating device or a battery status of the wireless locating device.

11. The method of any of claims 7 to 10, further comprising receiving an alert when a location of the wireless locating device is inside or outside of a boundary area, when a battery status of a battery of the wireless locating device does not meet criteria, when an ambient light level changes, when humidity is detected, or when loud sound is detected.

12. The method of any of claims 7 to 11, wherein the telemetry information includes at least one of a battery status or a battery measurement for the wireless locating device.

13. A non-transitory computer storage medium having stored thereon programming instructions that, when executed by one or more processors of a wireless locating device, cause the wireless locating device to perform operations comprising:
at a first time determined based on an update frequency, activating a Bluetooth radio of the wireless locating device to cause the Bluetooth radio to (i) broadcast a message that, when received by a user equipment, UE, results in a connection between the wireless locating device and the UE and (ii) provide first telemetry information to the UE; and
at a second time determined based on the update frequency, first activating the Bluetooth radio to cause the Bluetooth radio to broadcast a message and, when no connection is made between the wireless locating device and the UE, second activating (i) a global positioning system, GPS, radio to determine a location of the wireless locating device, (ii) a WiFi radio to determine location information of the wireless locating device, and (iii) a cellular radio to cause the cellular radio to provide second telemetry information, the second telemetry information including at least one of the location or the location information of the wireless locating device.

14. The non-transitory computer storage medium of claim 13, wherein the operations further comprise:
adjusting the update frequency based on output of a motion sensor of the wireless locating device; and/or
after transmitting the first telemetry information or the second telemetry information, entering an idle mode or a low power mode with none of the Bluetooth radio, the GPS radio, the WiFi radio, or the cellular radio actively transmitting.

15. The non-transitory computer storage medium of claim 13 or 14, wherein:
the message broadcast by the Bluetooth radio includes a device identifier for the wireless locating device or authenticating information for the wireless locating device; and/or
the first telemetry information includes at least one battery indicator but lacks a location of the wireless locating device and the second telemetry information includes, in addition to the location or location information of the wireless locating device, the at least one battery indicator.
